# EUROPEAN PATENT APPLICATION

(11) **EP 4 647 929 A1**
(43) Date of publication of application: **12.11.2025**
(21) Application number: 25168918.8
(22) Date of filing: 07.04.2025
(51) Int. Cl.: G06F 16/21, G06F 8/71

(54) **IMPROVEMENTS IN DATA PRODUCT DEVELOPMENT**

(30) Priority: 03.05.2024 GB 202406260
(71) Applicant: DataOps Software Limited, London NW1 7HU (GB)
(72) Inventor: ADAMS,, Guy, London, NW1 7HU (GB); BRADFORD,, Colin, London, NW1 7HU (GB); GETOV,, Martin, London, NW1 7HU (GB); CRUMLEY,, Luke, London, NW1 7HU (GB)
(74) Representative: Carpmaels & Ransford LLP

(57) **Abstract**

This disclosure relates to methods, devices, and computer-readable media for use in developing data products. One such method comprises receiving an existing build of the data product, identifying a data product version associated with the existing build, receiving a user-specified modification for the data product, in response to a user input, automatically determining a compatibility result for the modification with the identified data product version, based on the existing build of the data product, and in response to the determined compatibility result being a negative compatibility result, triggering a failure event in relation to the identified data product version.

## Description

### Field of Invention

The present invention relates to methods, devices and computer-readable media for use in developing data products. In particular, the present invention relates to improvements directed to facilitating the development of data products which are reliable, robust and backwards-compatible, such that a data product can be iteratively refined and improved without impairing the functioning of data consumers relying on the data product.

### Background

In recent years, interest has emerged in the field of data engineering regarding the concept of "Data as a Product" (DaaP). Under the DaaP approach, product-management methodologies are applied to datasets and to the digital assets that extract, transform, load, curate and manipulate them, with the aim of providing data consumers with data that is, inter alia, discoverable (it should be straightforward for target users to find, access and understand), trustworthy (it should provide commitments to data consumers such as completeness, accuracy, timeliness, etc.), and self-contained (other data should not be requisite to provide value from the data).

A "data product" is a concrete implementation of the DaaP paradigm as a real-world digital asset, and (as explained in more detail hereinbelow) may comprise any number of tables, views and/or materialised views, which are derived from one or more sources of data, for the purpose of being accessed by one or more data consumers.

It is customary for each data product to have its own associated data product manifest, which specifies various aspects of the data product such as its current version, its input and output ports, its service level indicators (SLls) and its service level objectives (SLOs). The data product manifest may also comprise one or more models and/or schemas, defining how data in the tables/views/materialised views is to be structured and organised. A schema may impose one or more structural constraints on data (e.g., a minimum number of items in an array), and/or one or more field-level constraints on data (e.g., a numerical range that a value for an item must fall within).

Developers who are working on a data product may wish to make additions and/or changes to the data product and its functionality. For example, a developer may want to add new features, fix issues, modify behaviour, and so on. When a developer has determined and specified how they wish to modify the data product (e.g., by adjusting the relevant settings and parameters, writing/editing any necessary code, editing configuration files, and so forth), they may generate a new build of the data product that incorporates their latest modification. This new build can then be deployed and used by data consumers (whether these data consumers be human users or automated processes).

Fundamentally, any data consumer has a choice either to "trust" the structure, quality, accuracy and integrity of the data it receives from the data product, or not to do so. If a data consumer does naively rely on data obtained from the data product, then a change to this data product may inadvertently cause the data consumer - an automated process, say - to fail in some way (e.g., crashing, generating errors, or otherwise behaving incorrectly). On the other hand, however, building in functionality to verify, sanitise or "double-check" the data into the consumer process itself is undesirable because it increases (often unnecessary) the consumption of computational resources by the overall system, such as allocation of processor time, memory pages and bandwidth, and increases developer workload.

Moreover, there is at present a significant disconnect between the skills and knowledge of software teams and data teams. Those programmers who are skilled enough to be familiar with the tools, techniques and technologies available in the world of software engineering are generally oblivious to the current challenges facing the world of data engineering, and vice versa.

Solutions currently used in the art therefore often fall short of ideal. Accordingly, it would be advantageous to provide systems and methods for developing data products that improve upon the present state of the art, such that a downstream data consumer could maintain its integration and avoid failures without incurring the unnecessary computational overheads that may be associated with validation or other processing.

### Summary

According to a first aspect of the present invention, there is provided a computer-implemented method for use in developing a data product, the method comprising: receiving an existing build of the data product, identifying a data product version associated with the existing build, receiving a user-specified modification for the data product, in response to a user input, automatically determining a compatibility result for the modification with the identified data product version, based on the existing build of the data product, and in response to the determined compatibility result being a negative compatibility result, triggering a failure event in relation to the identified data product version.

Advantageously, detecting when a user-specified modification is incompatible with the current version of the data product (i.e., the version to which the existing build belongs) enables the developer to ensure that as they develop, add to, and/or modify the data product, they are able to avoid inadvertently introducing undesirable changes that break integration. By using the identified version to make the determination, the need to avoid introducing such "breaking" changes is balanced against the need for functionality to be added and developed in successive version as the data product grows and evolves over time, thus ensuring both needs are met.

Optionally, the user-specified modification may comprise one or more of a modification of a schema, an addition, modification or deletion of one or more tables, an addition, modification or deletion of one or more columns, an addition, modification or deletion of one or more service level objectives, an addition, modification or deletion of one or more service level indicators, an addition, modification or deletion of one or more constraints, or an addition, modification or deletion of one or more views.

Advantageously, this enables the developer to iteratively refine a data product's definition/specification, and its functional properties relied on by downstream data consumers, without this refinement leading to harmful or unexpected consequences for said data consumers.

Optionally, determining the compatibility result may comprise determining a negative compatibility result by identifying that a table, column, service level objective, constraint, or other object present in the existing build is removed by the modification.

Advantageously, this prevents breaking changes from going unnoticed whereby the developer has relaxed the conditions that the data product and its constituent parts must comply with and/or reduced the availability of data which may previously have been relied upon by the data consumer.

Optionally, determining the negative compatibility result may comprise determining that a non-null constraint, a range constraint, a foreign key constraint, or a value-list constraint is removed by the modification.

Advantageously, this prevents breaking changes from going unnoticed whereby a data consumer is relying on a given field, row, column, table, array or object being non-empty, but this is no longer the case for the data product as modified.

Optionally, determining the compatibility result may comprise determining a negative compatibility result by identifying that a table, column, service level objective, constraint, or other object absent from the existing build is added by the modification.

Advantageously, this prevents breaking changes from going unnoticed whereby a data consumer querying the data product's data with (e.g.,) an SQL SELECT * statement is returned a different number of columns after the modification than they would have been returned prior to the modification (i.e., by the existing build).

Optionally, determining the compatibility result may comprise determining a negative compatibility result by identifying that a table, column or other object is renamed by the modification.

Advantageously, this prevents breaking changes from going unnoticed whereby a data consumer is rendered unable to locate a table/column/object due to a change of name.

Optionally, determining the compatibility result may comprise determining a negative compatibility result by identifying the existence of a record which would be invalid under the existing build but which is rendered valid by the modification.

Advantageously, this prevents breaking changes from going unnoticed that are caused by assumptions of invalidity of this specific type of record on the part of the data consumer (who uses the existing build) where such assumptions are threatened by the modification. If a data consumer previously relied upon a guarantee that a specific form or content for data would never be encountered (by virtue of previous constraints of the data product), and these constraints are subsequently relaxed, the form or content in question may subsequently appear and break the integration of the (unprepared) data consumer.

Optionally, determining the compatibility result comprises determining a negative compatibility result by identifying that a range associated with a range-based condition in the existing build would be widened by the modification.

Advantageously, this prevents breaking changes from going unnoticed whereby a data consumer who is reliant on data previously guaranteed to belong to a specific range unexpectedly encounters data comprising a value outside of that range.

Optionally, triggering the failure event may comprise either: outputting one or more error messages to a display, causing a build pipeline of the data product to fail, outputting a recommendation to change a version number based on the modification, or automatically creating a new version or branch of the data product for the modification.

Advantageously, outputting one or more error messages can flag to the developer that their proposed modification is incompatible with the identified version of the data product, allowing them to revise their modification so that it no longer contains a breaking change, and/or to take further action to verify whether the change is indeed a breaking change, and/or to manually create a new version or branch of the data product for their modification. Advantageously, causing a build pipeline of the data product to fail can physically prevent the building and/or deployment of a data product build which breaks integration with the data consumers relying thereon. Advantageously, outputting a recommendation to change a version number can prompt the developer to continue with their user-specified modification whilst ensuring that data consumers continue to use only those builds of the data product which are appropriate for them. Advantageously, automatic creation of a new version/branch speeds up the development process and reduces the number of interactions with the development environment that must be made by the user, whilst ensuring that new features and functions can be added without breaking integration.

Optionally, triggering the failure event may comprise outputting visual information to a user via a display and/or sending a signal to an external system to cause feedback to be provided to a user.

Advantageously, outputting visual information to a user via a display can flag to the user (i.e. the developer) that their proposed modification is incompatible with the identified version of the data product, allowing them to revise their modification so that it no longer contains a breaking change, and/or to take further action to verify whether the change is indeed a breaking change, and/or to manually create a new version or branch of the data product for their modification. Advantageously, sending a signal to an external system to cause feedback to be provided to a user can flag this incompatibility to the user even if they are not currently and actively interacting with their development environment, for example if they have browsed to a different tab, a different window, a different desktop or a different device.

Optionally, the feedback may comprise an alert and/or an email.

Advantageously, this enables feedback to reach the user even when they only have access to some other device providing alerts and/or emails, such as a mobile device. In this way, a developer can trigger a build pipeline (for example) and step away from their development environment without the risk that they may "miss" the failure event.

Optionally, the user input may be a user input to commit the modification to the data product.

Advantageously, getting the result and triggering the failure event responsive to the commitment attempt ensures that the user will not inadvertently commit a breaking change without having been at least forewarned first, and does so in a way which only requires the compatibility checking process to be executed once per commit, such that computational resources are not wasted.

Optionally, determining the compatibility result comprises determining a negative compatibility result by identifying that a column length and/or a column precision of a column in the existing build is reduced by the modification.

Advantageously, this prevents breaking changes from going unnoticed whereby a data consumer who is reliant on data with a previously guaranteed length or precision unexpectedly encounters shorter or more imprecise data.

Optionally, the user input may be the user input specifying the modification for the data product.

Advantageously, getting the result and triggering the failure event responsive to the receipt of the same input by which the data product modification is specified (e.g., responsive to a user typing code in a window of a development environment, to mouse clicks intended to specify at least part of the modification, and/or to key presses intended to specify at least part of the modification) can provide "live" feedback for the compatibility of changes on which the user is working, in real time, thus improving the development environment's responsiveness and usefulness.

According to a further aspect of the present invention, there is provided a device comprising a processor and a memory, the memory comprising instructions which, when executed by the processor, cause the processor to perform the method of any one of the aspects described above.

According to a yet further aspect of the present invention, there is provided a non-transitory computer-readable storage medium comprising instructions which, when executed on a computer, cause the computer to perform the method of any one of the aspects described above.

### Brief Description of the Drawings

Embodiments are described in more detail below with reference to the appended drawings, in which:
Fig. 1 is a block diagram illustrating an exemplary platform for provision of one or more data products, and various components thereof;
Fig. 2 shows (at least a portion of) an exemplary data product definition;
Figs. 3a, 3b and 3c show, respectively: a visual representation of data in tabulated form; and relational and non-relational schema definitions for data which may form part of, or be used to derive, a data product; Fig. 3d shows two data product "snippets" that can be assembled to form a data product manifest; Fig. 3e shows the data product manifest;
Fig. 4 is a block diagram illustrating an exemplary pipeline in which a data product may be built;
Fig. 5 graphically illustrates data product versioning in a development process;
Fig. 6 depicts a (simplified) exemplary development environment for a data product;
Fig. 7 is a flowchart illustrating a method for use in developing a data product; and
Fig. 8 is a block diagram illustrating components of a typical computer system which may be used to implement some or all of the present invention.

### Detailed Description

The detailed description set forth below provides information and embodiments of the disclosed technology with sufficient detail to enable those skilled in the art to practice the disclosure.

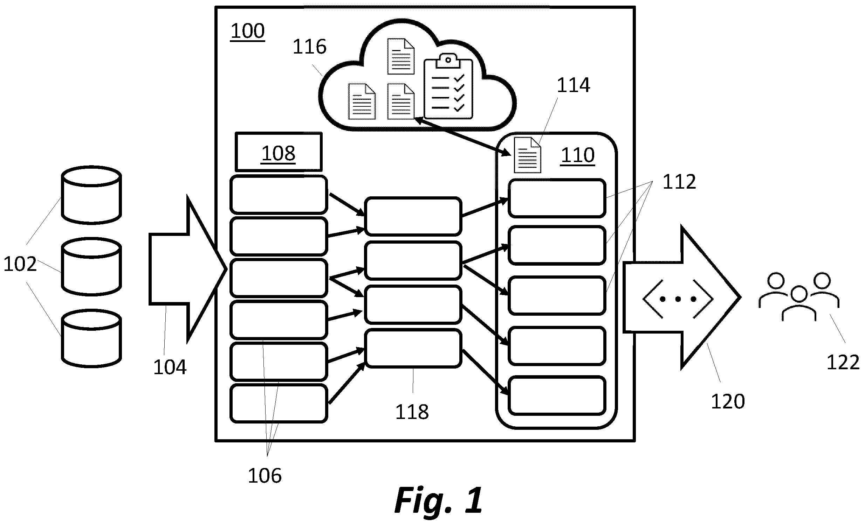

Referring to Fig. 1, there is depicted a typical data platform 100 supporting a data product 110. Data may be ingested from one or more data sources 102 via an ingestion process 104. The data may be ingested into a database 106, which may have a schema 108. In some embodiments, schema 108 may be a relational schema, with database 106 comprising a plurality of tables to hold the "raw" ingested data. Data product 110 may provide data 112 (e.g., in the form of various views, materialised views, and/or tables) derived from sources 102 to one or more data consumers 122 (depicted as users in Fig. 1 for the purpose of illustration only) via a data product interface 120. The data provided by data product 110 may be derived, in part or in whole, directly from the "raw" data in database 106. Additionally or alternatively, the data may be derived, in part or in whole, via secondary or intermediate data 118 in the form of one or more views, materialised views and/or tables which are themselves derived from database 106. The data product and its properties may be defined by a data product definition 114. Information about data product 110 may be published to a data product registry 116.

The components presented in Fig. 1 are now described hereinbelow in more detail. It should be recognised that except where explicit recognition is provided to the contrary (for instance by their inclusion in an independent claim of the appended claims), none of these components or features should be taken as essential for implementing the present invention.

### Data platform

A data platform (also referred to as a data management platform) may be any suitable infrastructure or ecosystem providing foundational capabilities for various data-related activities such as collecting, storing, managing, processing, analysing and/or accessing data efficiently and effectively. Kinds of data (management) platform include data clouds, data marts, data warehouses, data lakes and data lakehouses.

Various suitable existing data platforms will be known to those of ordinary skill in the art, and include (but are not limited to) Snowflake, Databricks, Google Cloud BigQuery, Microsoft Azure, IBM Db2, Oracle Cloud Infrastructure, and Amazon Redshift.

### Data product

Data products in general can be reusable data assets, services, or systems that use data to facilitate an end goal for users or organisations. Data products may integrate data from sources, process it, ensure compliance, and make the resulting data accessible to authorised data consumers. The data may optionally be made rapidly or instantaneously available to the data consumers. A data product isolates data consumers from the complexities of data sources, making the resulting data easily discoverable and accessible as a valuable digital asset.

Specific tangible examples of data products may include, for instance, reports, dashboards, datashares, machine learning models, and packaged applications. In various embodiments, a data product either is not just a software product or is not a software product at all. For example, data products may focus on leveraging data to generate insights or support decision-making, while software products focus on providing functionality through software applications or services. Data products may produce insights, analytics, or data-driven recommendations, while software products produce tangible outcomes or perform specific tasks. Data products may involve less direct user interaction and more automated data processing, whereas software products typically have user interfaces or APIs through which users interact with the software. In some embodiments the data product need not itself comprise any executable files (instead offering its functionality to data consumers via the data product interface(s), rather than executability).

The process of building a data product is an explicitly technical task, distinct from the mere activity of programming *per se,* or even developing a software product. Unlike an abstract computer program, a data product is implemented across real-world data infrastructure (comprising physical hardware such as servers for processing, storing and communicating data), and makes use of said infrastructure to transform and process the source data in a quantitative (rather than qualitative or cognitive) manner. Moreover, in several embodiments the source/ingested/input data used in the data product may itself comprise functional and/or technical data, including but not limited to sensor data, data from a control process (e.g., industrial control/SCADA), scientific data, or the like, further adding to the technical character of the data product and its build/deployment processes. Likewise, in several embodiments the data product may be configured to impose functional and/or technical constraints on data provided to data consumers in view of the nature of these consumers, who may for instance include consumers with technical limitations (size/memory constraints, etc.), control processes, or the like, further adding to the technical character of the data product and its build/deployment processes.

A data product may be a "standalone" data product (also referred to as a "simple" or "foundational" data product), such as data product 110 illustrated in Fig. 1. A standalone data product may be self-contained, delivering a specific data-related output to meet one or more data consumer requirements. The input to a standalone data product may be external data (in files, a relational database, behind an API, or any number of other data sources) which is ingested/loaded, curated, or transformed in some way, and then made available for downstream data consumers. Typically, when considering foundational data products, the downstream data consumer may be an analytical data consumer producing e.g., business intelligence reports/dashboards, or may be a data scientist.

Alternatively, a data product may be a "composite" data product. A composite data product is a data product which is assembled from multiple other data products. The output of an "upstream" data product can be used as one of the inputs to a "downstream" data product. Composite data products may integrate diverse datasets, formats, or levels of detail to provide a unified and enriched output. This advantageously allows enterprise-level queries to be answered by enabling cross-functional, cross-domain collaboration while ensuring data governance. For example, sales data from a first data product, customer data from a second data product and marketing data from a third data product may be joined using a composite data product to provide a 360-degree customer view.

### Data product definition

A data product definition, also known as a data product specification, may comprise a file, a collection of files, a database, an in-memory data structure, or the like, outlining the data product's characteristics, functionality, and requirements. The data product definition may be delivered from an API endpoint and/or from a data product registry. The data product definition is preferably a comprehensive document that provides clear instructions and guidelines for building and implementing the data product. The data product definition may include all of the properties necessary to build the data product, for example including (but not limited to) a data product name, a data product description, a data product version, input ports for the data product, output ports for the data product, SLIs and SLOs, and so forth. The data product definition may optionally include rules specifying when and/or how particular jobs or pipelines should be triggered.

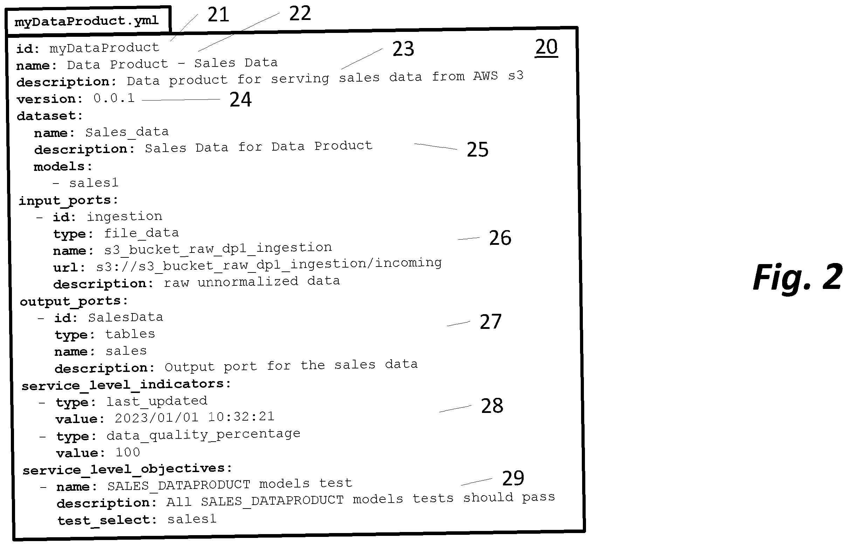

Referring now to Fig. 2, an illustrative embodiment of a data product definition 20 (i.e., a data product specification) is depicted. In some embodiments, data product definition 20 may specify a unique identifier 21 for the data product. In some embodiments, data product definition 20 may specify a name 22 for the data product. Name 22 may be a human-readable name and need not necessarily uniquely identify the data product. In some embodiments, data product definition 20 may specify a description 23 for the data product. The description may provide context summarising the purpose, intent and/or role of the data product to a human user/developer.

In some embodiments, data product definition 20 may specify a data product version 24. During development of a data product, a first data product specification for the data product may be developed and saved to a first file, and subsequently a second data product specification for the data product may be developed and saved to a second file. In such cases, each of the first and second file can define a distinct version of the data product. Two distinct versions of a data product may differ in terms of their specified dataset (e.g., the metadata of tables/views/materialised views that are part of the data product), their specified SLOs (e.g., in the names, semantics, and data types thereof), and/or their specified SLIs (e.g., in the names, semantics, and data types thereof).

In some embodiments, data product definition 20 may specify a dataset 25. Dataset 25 may refer to a collection of data objects, such as tables, views, functions, schemas, and descriptions. Data product definition 20 may comprise metadata of tables, views, and/or materialised views that are part of the data product, or at least may comprise one or more indications of where and/or how such metadata may be discovered (and/or one or more indications of where and/or how such metadata may be obtained). For example, as described in more detail hereinbelow, data product definition 20 may specify dataset 25 using a placeholder reference or extension point, such that when a relevant pipeline is run, a job of said pipeline retrieves the dataset's metadata and adds it to the source specification. This may occur, for example, as part of the process of publishing data product definition 20 to a data product registry (such as data product registry 116), such as in the form of a data product manifest.

In some embodiments, data product definition 20 may specify one or more input ports 26. Each input port may comprise a designated endpoint or interface through which data is received or ingested into the data product. In addition to the input port(s), data product definition 20 may further comprise one or more trigger rules and respective actions. These rules may specify the refresh conditions that must be in place in order for a refresh or re-build of the data product to occur).

In some embodiments, data product definition 20 may specify one or more output ports 27. Each output port may comprise a connection point made available by the data product, including for example (but not limited to) an S3 bucket, a Snowflake share, or a Snowflake role, among other options. Data product definition 20 may specify, for each output port 27, some or all of the information necessary for a data consumer to establish a connection (for instance, all of the necessary information excluding credentials).

In some embodiments, data product definition 20 may specify one or more service level indicators (SLIs) 28. Each SLI may be a metric that can be used to assess, qualitatively or quantitatively, the level of service provided by a system or service. SLIs may optionally include e.g., a current percentage of passed tests, the date and/or time of the most recent update, and/or a count of the number of rows that fail quality checks (which may be computed by pipeline execution).

In some embodiments, data product definition 20 may specify one or more service level objectives (SLOs) 29. Each SLO may be a collection of objectives and/or specific targets that the data product aims to achieve. For example, an SLO may include objectives declaring that data is no more than a specified number of hours old, or that a specified percentage/proportion of rows pass quality checks.

The exemplary aspects of data product definition 20 described hereinabove are provided purely for illustrative purposes and are by no means either exhaustive or limiting. None of these aspects should be considered essential for the provision of any data product definition more generally, which in practice may include any suitable combination of features, details and specified properties and parameters as would be readily understood by one of ordinary skill in the art.

### Sources & ingestion

At least some of data source(s) 102 may be external to data platform 100. Additionally or alternatively, at least some of data source(s) 102 may be internal to data platform 100. In some embodiments, data sources 102 may comprise a combination of internal and external data sources. At least some of data source(s) 102 may be in a multi-structured form. At least some of data source(s) 102 may be ingested in batch. At least some of data source(s) 102 may be ingested in real-time.

Data sources 102 may comprise on-premises and/or off-premises sources. Data sources 102 may comprise cloud sources, cloud services and/or cloud providers. Data product 110 may advantageously abstract the physical storage location of its source data from data consumers 122. In this way, data consumers can be isolated from the complexities of the various sources of data.

Almost any conceivable data source may provide a candidate for data source 102 as will be appreciated by those of ordinary skill in the art. As a handful of purely illustrative and non-limiting examples, data source(s) 102 can optionally comprise e.g., Salesforce, SAP, Marketo, Hubspot, website logs, application logs, surveys, files, sensor data, scraped web data, social media/text data, relational databases (e.g., MySQL sources), non-relational databases (e.g., one or more MongoDB sources), APIs (e.g., REST APIs), enterprise systems (e.g., customer relationship management, enterprise resource planning, or human resources management systems), or the like. One or more of data source(s) 102 (and/or the data therefrom) may be subject to source testing as described in more detail hereinbelow. The source testing may optionally include testing for data integrity and/or data freshness.

### Interface & data consumers

Data product interface 120 may provide a means by which a data consumer can interact with data product 110. Properties, parameters, setting and/or details of data product interface 120 may be defined in data product definition 114. For example, data product definition 114 may specify the format of any query that should be used by a data consumer 122, the format and/or content that the data consumer should expect from the response to their query, and/or various other patterns, properties or behaviours governing their interaction with the data product. Access to data and/or metrics of a data product may be e.g. via one or more of: APIs; a language like SQL; visualisation options; and so forth. The interface 120 may restrict data consumers 122 from accessing the raw data underlying the data product.

Data consumers 122 may include any one or more users that are authorised to access data product 110, e.g., human users, either within a business or organisation or external to it. Such human users may optionally include analytical users e.g., data analysts, data engineers and/or data scientists. Additionally or alternatively, data consumers 122 may include any one or more processes (e.g., automated processes and/or applications) that are authorised to access data product 110, e.g., processes within or external to a business or organisation. Data consumers 122 may be configured to produce dashboards, business intelligence reports, and the like. Data consumers may feed data from data product 110 into one or more further data products as input (i.e., composite data products).

In various embodiments, data product registry 116 can be accessible by data consumers 122. Advantageously, this can permit data consumers 122 to discover data products and view one or more aspects of respective metadata for these data products, such as certification or quality metadata, usage metadata, efficiency metadata, security metadata, and so forth.

Access control means may optionally be provided to ensure that for each given interface 120, only suitably authenticated and/or authorised users can access the output of data product 110 via interface 120. Access control means may vary depending on the nature of the interface, though in each case suitable means will be known to those skilled in the art. In various embodiments, role-based access control and/or attribute-based access control may be used.

Generally, a single data product 110 may have either one interface 120 or a plurality of interfaces 120. For instance, a plurality of interfaces 120 may be provided if data product 110 has more than one kind of target data consumer. To give a specific example, where a data product is using a specific data modelling technique such as Data Vault, a first interface 120 may provide data in native data vault format for use by data engineers looking to create automated systems or composite data products, whilst a second interface 120 may provide the same data flattened and normalised into some sort of data mart, to benefit any human users.

In addition, distinct interfaces 120 may provide output in different formats - for example, an interface 120 could provide data as a data share, as a query into a database, or as a set of one or more CSV files (e.g., a downloadable CSV file). These formats can be thought of as distinct interfaces for providing access into the same underlying data product.

In this way, data product 110 can be designed to allow multiple access approaches, such as low/no code or programmatic approaches. Different data consumers may be able to use different tools of their choice to access data. This includes analytical engines, IDEs, APIs like SQL or GraphQL, SDKs, reports, dashboards, and/or large language models (LLMs).

### Views, tables, & secondary data

As used herein, a "table" may generally refer to a basic structure in a database or data product (e.g., in a relational database) that organises data into rows and/or columns. In various examples, each row represents a record, and each column represents a field or attribute of that record. Tables may be used to store and manage structured data.

As used herein, a "view" may generally refer to a virtual table that is based on the result set of a query (such as an SQL SELECT query). The view may not store any data itself, but may instead be a saved query (e.g., SQL query) that can be executed to retrieve data dynamically from one or more underlying tables. Views may be used to simplify complex queries, abstract the underlying data schema, and/or enforce security and access controls by limiting the columns or rows that users can see.

As used herein, a "materialised view" may refer to a variant which, unlike a typical view, stores the query result in physical storage. Materialised views may be precomputed and refreshed periodically to ensure that the data they contain is up-to-date ("fresh"). This can speed up query execution by removing the need to compute the result set on every access. Materialised views may be used to improve the performance of complex queries or reports that involve aggregations, joins, or other computationally expensive operations.

The data product's data 112, and/or secondary data 118 from which it derives, may comprise any appropriate combination of tables, views, materialised views, or other kinds of structured data which may be computed or loaded in physical or virtual form. Secondary data 118 may be obtained by processing raw data in database 106 and/or by applying one or more queries to database 106 in a suitable query language. For example, structured query language (SQL) may be used to obtain secondary data 118 from database 106 (and, indeed, in some embodiments, to obtain data 112 from secondary data 118 and/or from database 106).

### Database & schema

Database 106 may store any kind of structured data according to a suitable schema 108. In some embodiments, database 106 may comprise a relational database. In other embodiments, database 106 may comprise a non-relational database such as a NoSQL database. Database 106 may comprise e.g., an object database, document database, time-series database, special database, graph database, or the like.

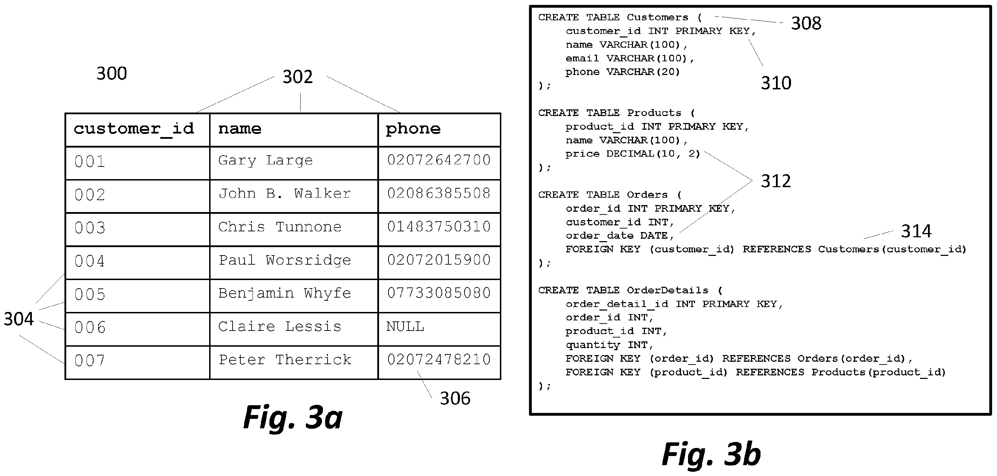

Fig. 3a depicts a simplified example of a table (or view) 300 as may typically be found in a relational database. In the relational model, data is organised into one or more tables like table 300, each having a plurality of rows 304 and columns 302. Each row may represent a distinct record, and each column may represent a distinct attribute, field, or property. A value 306 or a NULL entry may be provided for any given row-column pair. That is, each row/record 304 may comprise a value 306 (or NULL) for each column/field 302 (or equivalently, each column may be said to comprise a value (or NULL) for each row). The data in the relational database can be structured to follow a predefined schema defining the structure, constraints, and relationships of the data.

Fig. 3b depicts a definition in structured query language (SQL) for an exemplary schema. The exemplary schema may be a schema for a relational database, such as a database of the type in which table 300 of Fig. 3a may appear. The illustrated schema definition includes a plurality of table definitions 308, each declaring a distinct table for the database with a unique table name.

In the illustrated example, each table definition 308 comprises a primary key constraint 310, which uniquely identifies each record (i.e., row) in the respective table. A database management system implementing the relational database may enforce primary key constraint 310 in the sense of ensuring that the relevant column of each table is free of duplicate or null values.

Other constraints may be applied within the relational database. For example, each column/field may be subject to a datatype and/or length constraint 312, specifying the type of value that each record can take for that field (e.g., string, integer, decimal, date, etc.) and/or further qualifying that value in terms of e.g., allocated length, number of significant figures, and the like. Additionally or alternatively, one or more columns of a table may be subject to a foreign key constraint 314, establishing a link from a column in the referencing table (designated as a foreign key) to a column in the referenced table (e.g., a column designated as a primary key). A database management system implementing the relational database may enforce referential integrity between the foreign key and its target.

Still other constraints which may additionally or alternatively be applied and enforced within the relational database will be known to those of ordinary skill in the art.

It is not essential that a database used in accordance with embodiments of the present invention use a relational database, and other kinds of database may be used instead. Examples include non-relational databases such as a NoSQL (Not only SQL) database, object database, key-value store, document database, and so forth. The non-relational database may follow any one of a variety of possible schemas, including e.g., schemas having a nested structure or other more complex cases.

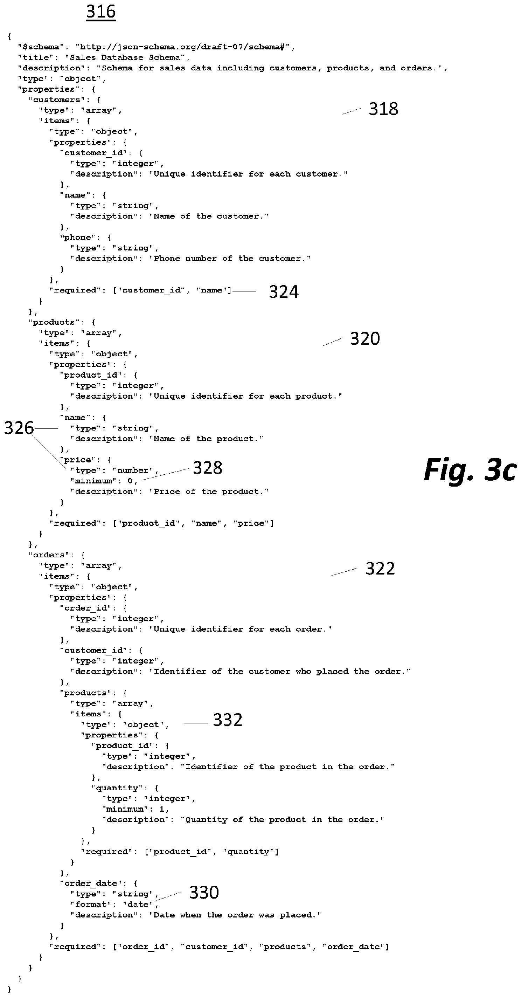

Fig. 3c depicts a definition in JavaScript object notation (JSON) for an exemplary schema 316. The exemplary schema may be a schema for a non-relational database, such as a database of the type in which the data seen in table 300 of Fig. 3a may appear (albeit without necessarily having a strictly rows-and-columns relational table structure). The illustrated schema definition includes a plurality of objects definitions 318, 320, 322 (respectively for customer data, product data and order data). Each of these top-level objects may be thought of as analogous to one of the table definitions 308 of Fig. 3b.

Schema 316 may comprise one or more structural or schema-based constraints. For example, a non-null or required constraint 324 may specify the presence of values in a given one or more columns as being essential. A database management system implementing the non-relational database may enforce required constraint 324 by ensuring that a value is always provided for each column designated as necessary.

Schema 316 may additionally or alternatively comprise one or more field-level constraints, i.e., constraints on values taken by fields rather than at the database's structural level. For example, field-level constraints may include any one or more of: datatype constraints 326, range constraints 328, format constraints 330 (specifying a particular pattern or regular expression that data in a field must match), or any other appropriate field-level constraint known to those of ordinary skill in the art.

Another example of a field-level constraint is a value-list constraint (sometimes called an "enum" or "enumerable" constraint), which specifies that the value taken by the field must be one of a finite number of predefined acceptable values (e.g., in a list) - for instance, a value-list constraint for a field called "day" may require a value equal to one of "MON", "TUE", "WED", "THU", "FRI", "SAT" or "SUN".

Schema 316 may in some embodiments have a "flat" structure, i.e., wherein all of the data is representable as a single table of rows and columns. However, in various embodiments a schema 316 may include nesting 332 - each object may optionally include reference to one or more further objects and/or one or more arrays, and each array may optionally include reference to one or more further arrays and/or one or more objects. In the example shown in Fig. 3c, for instance, "orders" defines an array of objects, each object having a "products" property which itself defines an array of objects, each object having a first integer uniquely identifying a product and a second integer identifying a quantity ordered of that product. In this manner, nesting 332 can permit the representation of complex data structures and relationships within the schema of a database.

### Data product registry

Referring again to Fig. 1, information about data product 110 may be published to a data product registry 116 (also referred to as a "data product catalogue", or a "data product marketplace"). Data product registry 116 may be part of (and/or hosted by) data platform 100. Data product registry 116 may be accessible by data consumers 122.

Data product registry 116 may store information about each of a plurality of data products, thus effectively acting as a repository for data products and associated data (e.g., associated metadata) and allowing the data products (and (meta)data) to be discovered. The information stored about each data product may be based at least in part on its data product definition/specification 114. Additionally or alternatively, the information stored about each data product may be based at least in part on its data product interface 120. The stored information may comprise e.g. information about the operations of a data product, such as definitions of how data can be acquired by a data consumer from the product, what it should include, the quality of data and service level the data consumer can expect, and so forth. Where applicable, the published interface of data product 110 preferably provides the sole means for access by data consumer 122, such that no "back door" to the underlying data exists.

Data product registry 116 may comprise one or more builds of data product 110, including for example the latest (most recent) build of data product 110. Data product registry 116 may store versioning information (e.g., one or more data product versions) for each of its data products. Data product registry 116 may be searchable.

Data consumer 122 may use data product registry 116 to identify rating, quality, and/or certification information about a plurality of data products, which can be beneficial in deciding which data product to use. For example, if there are 15 data products named "quarterly sales," a data consumer can determine which one is approved, such that all members of a team are working with the same numbers. At the same time, data managers can remove, rename, or annotate the other 14 instances.

Data product registry 116 may be configured to record and/or provide (e.g., to a data consumer) usage data and/or consumption data for the plurality of data products. This can serve to inform a user which of the data products are in use more frequently or less frequently, helping them to discover "data tribes" and/or to make determinations about which data products are unused and can safely be retired. Optionally, data product registry 116 may be configured to use automation to mark data products as stale based e.g., on pattern and usage analysis. This can advantageously help to reduce "data debt".

Data consumer 122 may use data product registry 116 to explore operational metadata for data products, such as security access rights, data creators, version numbers, purpose, and user consent. A data consumer may use the registry to calculate productivity via "data telemetry," such as the frequency of releases, number of data-related goals and objectives met, the level of buy-in, and support for the data strategy within an organisation.

As mentioned above, the information about any given data product 110 stored in data product registry 116 may be based on data product definition 114. Embodiments are envisioned in which data product definition 114 is published directly to data product registry 116 in its entirety. However, in other embodiments, data product definition 114 may act as a "base" definition, whilst the data published to data product registry 116 is a more complete or more populated set of metadata, derived from said base definition. For example, this "complete" definition/specification may extend, enhance, enrich, or otherwise "flesh out" the base definition provided by data product definition 114. The set of data ultimately published to data product registry 116 about any data product 110 may be referred to as a "data product manifest".

### Data product manifest

A data product manifest may be a file or document that outlines the properties and/or metadata of a data product, to provide data consumers 122 with essential information for using the data product. The data product manifest can thus define a "contract" between the data product and its consumers. The data product manifest document may be stored e.g., in the data product registry.

The data product manifest may be provided in a machine-readable format and/or in a human-readable format. A machine-readable manifest of a first data product may be used to automate one or more inputs of a second (composite) data product that consumes the first data product.

There are various ways in which a data product manifest may be created from a base or incomplete (i.e. not yet fully populated) data product definition, as will now be explained.

In some embodiments, data product definition 114 may comprise one or more "extension points", "base definitions" or "placeholders", which may be in the form of code and/or markers left in a file by a data product developer. These extension points may then be filled and/or replaced with more detailed information by one or more processes, for example by one or more jobs running in a pipeline (described in more detail hereinbelow).

A data product manifest may be created from a data product definition using any suitable means that will be known to those of ordinary skill in the art. For example, the data product manifest can be created by running one or more jobs or processes. In some embodiments, a pipeline can be used to create the data product manifest from a data product definition, though it will be understood that such a pipeline is not essential. In some embodiments, the pipeline may publish the latest data product manifest (or similarly, update the details of the published data product manifest) every time it is run.

During the pipeline run, data product definition 114 may be validated, enriched with metadata, and deployed to data product registry 116. One or more jobs of the pipeline may read data product definition 114 and/or provide the above-mentioned enriching metadata.

For example, in one illustrative implementation, during the pipeline run, one or more jobs of the pipeline may generate data product "snippets". At the end of the pipeline, the data product orchestrator produces the data product manifest from the specification and these data product snippets. A pipeline (and moreover, any particular job therein) may produce more than one data product snippet.

In any case, at the end of the pipeline's execution, the data product manifest can be generated as a merged document and published to data product registry 116.

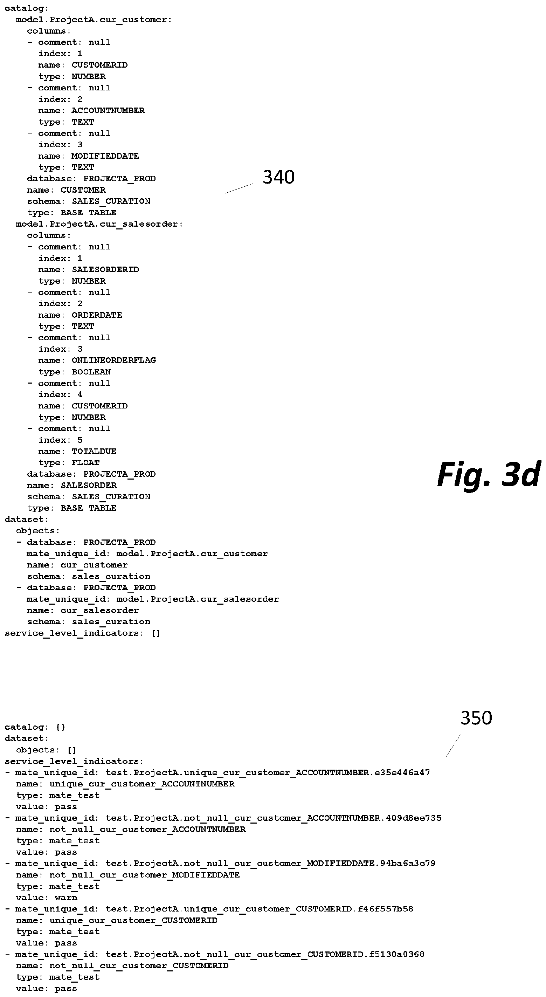

Fig. 3d depicts an exemplary data product definition 340 and a data product "snippet" 350. The data product snippet may comprise a set of metadata relevant to the data product. The data product snippet may be generated by an automated process or job. The automated process or job may be a part of a pipeline (e.g., an automated pipeline) or a stage thereof.

As can be seen in Fig. 3d, data product definition 340 comprises: data pertaining to tables of a data product; for each table, data pertaining to the columns of the table; and, for each column, a constraint (in this case a datatype constraint). Data product definition 340 as illustrated in Fig. 3d does not comprise definitions of any service level indicators. By contrast, data product snippet 350 does not comprise definitions of tables or columns, but comprises a plurality of definitions for service level indicators of the data product and their values. The service level indicators may comprise uniqueness tests and/or non-null tests, as shown in the illustrated example.

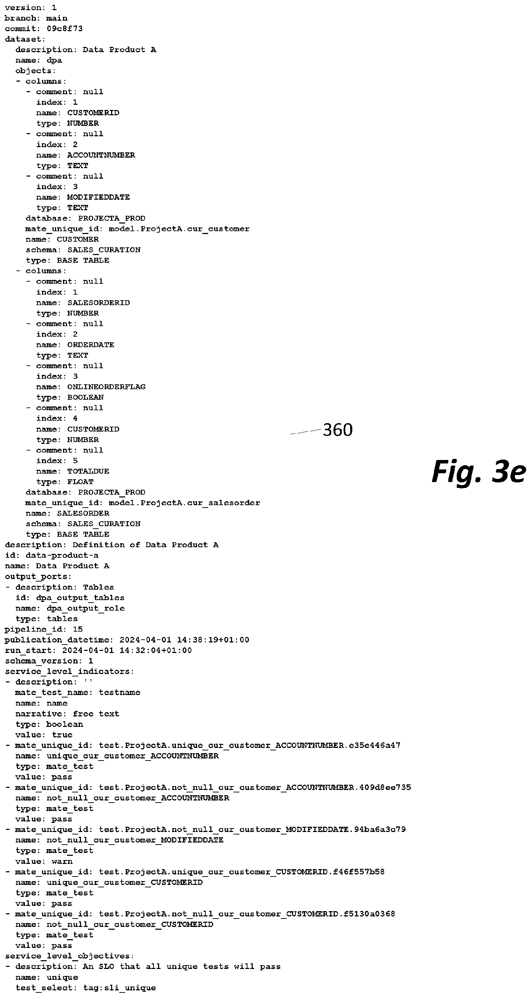

Fig. 3e depicts a data product manifest 360 which may be generated as a consequence of "stitching" together data product definition 340 and data product snippet 350 (and optionally one or more additional snippets). The stitching may comprise incorporating snippet 350 into definition 340 using the extension points/placeholders therein. A pipeline may produce data product manifest 360 from a plurality of snippets generated by a plurality of jobs. Each snippet may be generated by a different job in some embodiments.

### Composite data products & dependencies

Data product "dependencies" may refer to the relationships and interdependencies between different data products organised hierarchically within an ecosystem. Optionally, in the case of composite data products (where some data products are dependent on other data products for their input data), dependency information may be published to data product registry 116 along with the other data, thus providing a "single source of truth" for relationships between the data products in the composite case.

Data platform 100 may store some or all of the information defining dependencies in composite data products, and/or may comprise a rules engine for managing dependencies and updates. In some embodiments, the composite data products' dependency information may be stored in data product registry 116, for example, or any suitable part of platform 100.

The data product dependencies may inform the implementation of a composite data product. For example, data platform 100 may provide a platform to manage data product dependencies using one or more data product definition/specification files, registries, and/or data product manifests. A pipeline can use the data product definitions and known dependencies to build the data product, create a data product manifest, and publish it into the central project registry, thus enabling communication among all data products.

Data products can be arranged in levels within a hierarchy, starting from the source data products, followed by intermediate data products, and finally leading to data consumer-facing data products. Each level in the hierarchy may be a building block for the subsequent level, providing processed, transformed, or aggregated data that is further refined or used by the higher-level data products. Pipelines can be run to build data products, update them, and refresh their data to create different versions of the data products when changes are made.

### Pipelines & data product builds

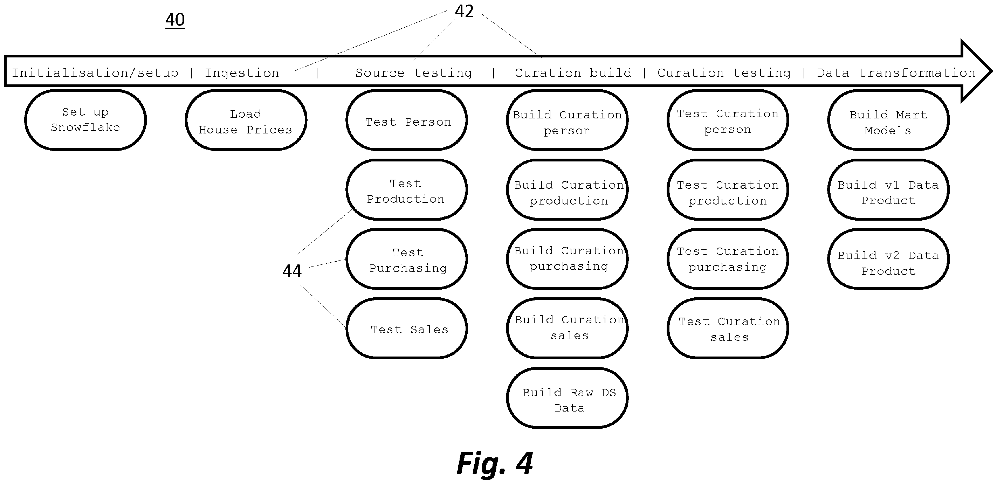

Data products may be built from their data product definition using any suitable means that will be known to those of ordinary skill in the art. In some embodiments, the data product can be built by running one or more jobs or processes. In some embodiments, a pipeline may be used, though it will be understood that such a pipeline is not essential. Referring now to Fig. 4, there is depicted an exemplary automated pipeline 40 that a data platform (e.g. data platform 100) may execute. Pipeline 40 comprises a plurality of jobs 44, which may optionally be organised (as illustrated) into a plurality of stages 42. Each job 44 represents an individual step of the process for ingesting data and transforming it into the final data product. In some embodiments, jobs may run either successfully or unsuccessfully (i.e., may "succeed/pass" or "fail"). In some embodiments, failure of one job 44 may cause pipeline 40 as a whole to fail.

Various embodiments of the present invention are contemplated in which, after a modification for a data product is specified by a user, a determination is made that this modification is incompatible with a particular version of that data product (e.g., the "current" or latest version), and accordingly a failure event is triggered in relation to that version. For example, when the negative compatibility result is determined, the method of the present invention may in some cases react by causing a build pipeline of the data product to fail. This may entail the pipeline and/or one or more of its jobs being interrupted before execution is finished; additionally or alternatively it may entail interruption of the pipeline without building one or more models, artifacts or data products; without deploying a data product; and/or without publishing metadata about a data product.

In some embodiments, all jobs of a pipeline may be performed successively in a sequence with each job commencing only after the previous job has finished. Advantageously, in some embodiments parallelisation may be used to speed up the overall pipeline, with two or more jobs from the same stage running concurrently, with synchronisation only applied at the stage level, rather than the job level. One or more desired pipeline behaviours may be specified by a user of data platform 100. Additionally or alternatively, information about the "latest" pipeline run by a data product developer (and/or about its resultant build) may be shown to the developer (e.g., the pipeline status such as "running", "completed/success", "terminated/failure" or the like), for example via a development environment.

Pipelines may be used to implement a variety of different behaviours, such as hourly, daily, or weekly ingestion jobs. A pipeline may in general comprise jobs for moving data, virtualising data, transforming data, and/or caching data in memory. A pipeline may comprise a data lakehouse, a data fabric, or the like. A pipeline may provide orchestration capabilities to ensure that the jobs in the pipeline are executed in the correct order and dependencies are met, thus increasing reliability and reducing the risk of errors. In some embodiments, the structure of jobs within the pipeline may comprise a directed acyclic graph (DAG).

Each pipeline may be defined in a file of any suitable form (e.g., a configuration file comprising a markup language such as YAML). The pipeline file may be populated with code provided by a data product developer. A data product developer may be able manually to run (i.e., execute) the pipeline once defined. Individual jobs within the pipeline may be written in suitable language (e.g., YAML). Each job definition may be written in such a way as to identify the pipeline to which it belongs (and optionally, where applicable, the stage of said pipeline to which it belongs). Whilst a pipeline may in various embodiments be defined in a single monolithic file, it may be advantageous for development to split the pipeline conceptually into individual jobs having their own files. Optionally, to further aid development, the development environment may permit a data product developer to define stages and/or parameters for the pipeline too (which may be also defined in their own files).

A "stage" of a pipeline can be used to define a subset of jobs from the overall pipeline which are to be executed in parallel. "Variables" which control the behaviour of a pipeline and/or its individual jobs/stages may be defined.

In some embodiments, as illustrated in Fig. 4, pipeline 40 may comprise one or more platform setup jobs 44 (e.g., in a platform setup stage 42), via which a data platform (such as Snowflake) can be automatically configured and/or where bootstrapping may occur.

In some embodiments, pipeline 40 may comprise one or more ingestion jobs 44 (e.g., in an ingestion stage 42), in which the data is collected from the various sources (such as databases, files, APIs, streaming platforms, or other suitable data sources such as those mentioned elsewhere herein).

In some embodiments, pipeline 40 may comprise one or more source testing jobs 44 (e.g., in a source testing stage 42), in which tests are executed upon the source data (e.g., as loaded in database 106) to validate completeness, accuracy, consistency, quality and/or other desirable criteria expected from the source data. The results of source testing may be fed to one or more data product manifests as described herein.

In some embodiments, pipeline 40 may comprise one or more build jobs 44 (e.g., in a source testing stage 42), in which a build may be generated for the tables/views 112 of data product 110, for the tables/views in intermediate data 118, and/or for any other models built according to pipeline 40.

Other examples of jobs/stages which may form part of pipeline 40 include e.g., jobs/stages for initialisation of a data vault; jobs/stages for data transformation; jobs/stages for testing of the transformation/transformed data to validate the transformation; jobs/stages for automatically generating documentation for data products built in the pipeline; and/or jobs/stages for automated cleanup at the end of pipeline execution. Other suitable examples of pipeline jobs, stages, variables and configurations will be readily apparent to those of ordinary skill in the art.

### Data product versioning

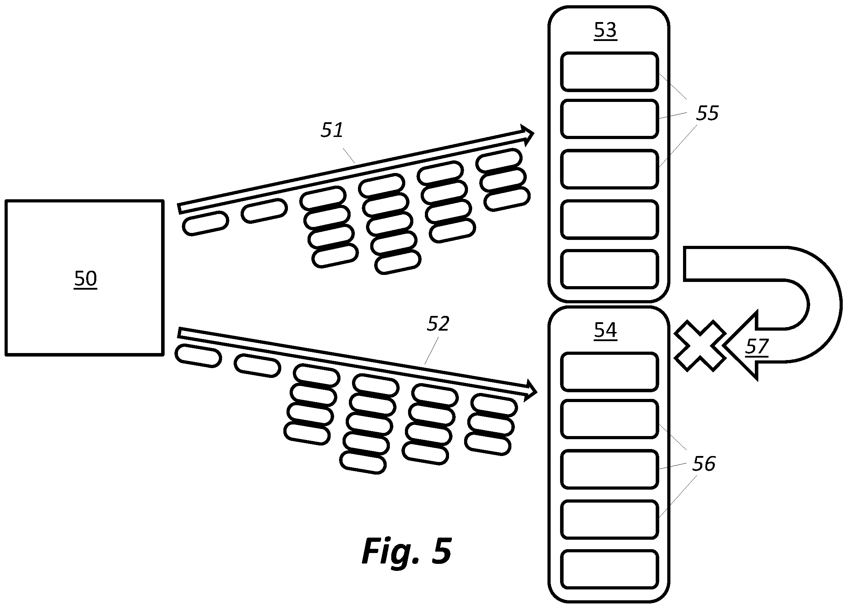

Referring now to Fig. 5, an example of data product versioning in a development process is depicted. A data product developer may make modifications to a data product definition, e.g., changes relating to the data product's sources, schemas, models, constraints (e.g., structural or field-level constraints), SLIs, SLOs, and so forth. Any such modification may be considered either a "breaking" change, or a "non-breaking" change, based on whether the modification gives rise to a potential for one or more properties of the data product which were formerly guaranteed to data consumers in a previous built to be lost (thus opening up the possibility that one or more processes relying on the data product and its data can stop working correctly, i.e., to "break").

As shown in Fig. 5, a data product definition 50 (which may include e.g., a first schema having first constraints) may be used to obtain a first data product build 53 having first tables/views 55, via a first execution 51 of a build pipeline.

A developer may then make some desired modification to data product definition 50, for example using a development environment as described in more detail hereinbelow.

Once the developer has specified this modification, they (or their development environment via automation) may attempt to obtain a second data product build 54 having second tables/views 56, via a second execution 52 of the build pipeline.

If the modification is a non-breaking change, the second execution may succeed, resulting in second build 54 being generated (and, optionally, any new or updated metadata being published to the relevant data product repository for the benefit of data consumers). In this example, the resultant data product build 54 may be of the same data product version (or at least the same "major" version) and may hence have the same or corresponding version information to that of data product built 53.

On the other hand, if the modification is a breaking change, various actions may occur to prevent (or decrease the likelihood of) problems reaching downstream data consumers. For example, in some embodiments, an example of such an action (which can be considered a "failure event") may be outputting one or more error messages to a display. The error message(s) may be output to a status bar; to a readout such as a text box, field or panel; to a pop-up or alert window; to a log file; to a dashboard; to a graphical component in a development environment or text editor application; and/or to a combination of these (e.g., a status bar in a development environment, and so forth). The error message(s) may be output in real time in response to the non-compatibility being determined, thus providing continuous guidance and assistance to the developer during the completion of their ongoing data engineering task.

In some embodiments, an example of an action in response to determining incompatibility may include causing a build pipeline (e.g., an automated build pipeline) of the data product to fail, as described in more detail elsewhere herein.

In some embodiments, an example of an action in response to determining incompatibility may include outputting a recommendation for a user (e.g., a data product developer) to change a version number based on the modification. This enables the user to successfully generate a new build of the data product that incorporates their modification without breaking integration for data consumers of the previous build, by making their desired modification a new version or new branch of the data product in order that the build pipeline can be re-run successfully (resulting in the data product being build, deployed and/or published), this time without any interruption or failure caused by version-incompatibility.

In some embodiments, an example of an action in response to determining incompatibility may include automatically (i.e., without requiring user intervention) creating a new version or branch of the data product for the modification. This solves the same problem mentioned above, i.e., it brings about a data product with a data product definition that is perfectly compatible with its own version number and can therefore be successfully built, deployed and/or published e.g., using the pipeline. Optionally, in addition to creating the new version or branch, a further step of running the build pipeline for the new version/branch may also be carried out, which can further help to provide a fast, reliable development process.

Should the developer nevertheless desire to make a breaking change to data product definition 50, they may be enabled to do so on the condition that a new version of the data product is built (and, in some optional embodiments, published in the appropriate registry). For instance, if the schema for data in data_product_xyz version 1 is modified by a breaking change, the resultant data product becomes data_product_xyz version 2-once the developer is satisfied that the latter version is stable, they can release it and give data consumers a specified period of time to migrate from version 1 to version 2 (before deprecating version 1).

### Data product development environment

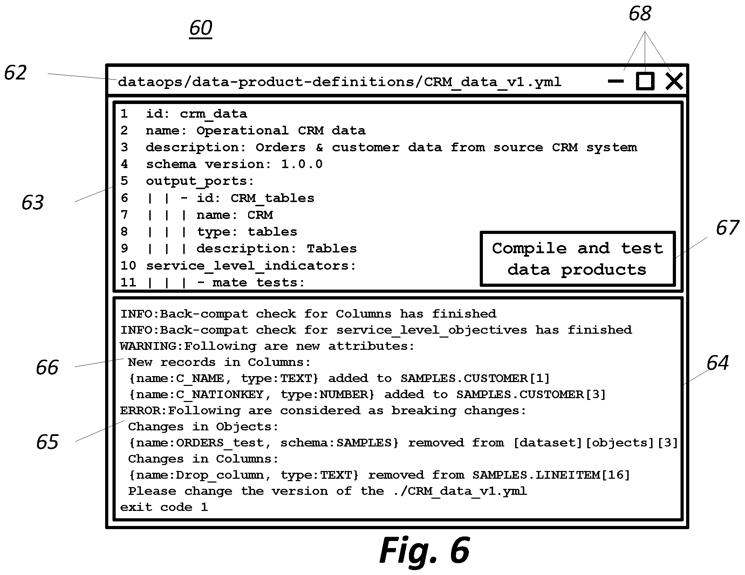

Referring now to Fig. 6, there is depicted a (simplified) exemplary development environment 60 for a data product. A development environment may generally comprise an application, such as a web application configured to run in a user/developer's browser, or a native application configured to run within the operating system on the user/developer's device. Exemplary web browsers include e.g. Microsoft Edge; Google Chrome; Mozilla Firefox, Opera, and Safari. Exemplary devices include e.g., desktop computers, laptop computers, tablet computers, smartphones, and the like. Exemplary operating systems include Windows, Linux, macOS and the like. The development environment may comprise a graphical user interface (GUI) providing a user with access to the necessary infrastructure, tools, and processes for developing, testing and/or deploying a data product.

In the illustrated embodiment, development environment 60 comprises a breadcrumb 62 indicating to the user the name and/or path of a file or other object currently being edited.

In the illustrated embodiment, development environment 60 comprises an edit pane 63. Edit pane may be configured to permit user interaction for the purpose of editing an object, e.g., editing the contents of a file by using a keyboard and/or mouse. Examples of files that may be edited by a user include configuration files, text (.txt) files, and files written in various high-level languages such as query languages like SQL, markup languages like YAML, JSON or HTML, or programming languages like Python, Java or C.

In some embodiments, development environment 60 may be configured to detect user input (e.g., input for interaction with edit pane 63) and run the backwards compatibility determination check in response to this detected user input. For example, a compatibility result may be determined upon each keystroke input into edit pane 63, or on each word input into edit pane 63, or on each new line or paragraph input into edit pane 63.

In the illustrated embodiment, development environment 60 comprises an output pane 64. Output pane 64 may be configured to display feedback, notices, warnings, error messages and/or other appropriate information to a user/developer working in development environment 60. The content of output pane 64 may be based upon content or properties of files being worked on, statuses or event pertaining to pipelines being run, test outcomes, or the like. The content of output pane 64 may be generated, updated and/or refreshed in response to an interaction with action control 64 (see below) or some other suitable GUI element.

In the illustrated embodiment, output pane 64 comprises at least one error message 65 which has been generated and displayed in accordance with an embodiment of the present invention. Error message 65 may be output in response to a negative compatibility result being determined; that is, the cause of error message 65 may be a determination that a modification specified by a user for the data product under development is incompatible with a particular version number, based on an existing build of the data product. This determination optionally may have been made e.g., in response to an interaction by the user with action control 67 to commit the change to a repository and/or to build the data product.

In the specific illustrated example, error message 65 informs the user that their proposed removal of a given object and column from the schema of underlying data are breaking changes, since a data consumer that is relying on (e.g., querying) these elements is no longer able to do so and may cease to be able to perform its function correctly.

In the illustrated embodiment, output pane 64 comprises at least one warning message 66 which has been generated and displayed in accordance with a further embodiment of the present invention. Warning message 66 may in some embodiments be output in response to a compatibility result being determined which is negative, though which may be less negative (e.g., of a higher ranking or smaller magnitude) than a compatibility result giving rise to error message 65. In other embodiments, warning message 66 may be output in response to a compatibility result being determined which is neither fully negative nor fully positive. This determination optionally may have been made e.g., in response to an interaction by the user with action control 67 to commit the change to a repository and/or to build the data product.

In the specific illustrated example, warning message 66 informs the user that their proposed addition of two columns to the schema of underlying data are potentially-breaking changes (or semi-breaking changes), since a data consumer that is querying the data with an SQL SELECT * statement (say) may obtain an unexpectedly larger query outcome than they would with the previous build, thus potentially breaking integration if the data consumer has failed to follow expected best practices for using the data product.

In the illustrated embodiment, development environment 60 comprises an action control 67. Once a user/developer has specified their desired modification to the data product (e.g., a desired modification to its data product definition), they may use action control 67 to perform various subsequent steps in the development process. For example, action control 67 may be configured to cause validation of one or more files, testing of one or more datasets, measurement of one or more SLOs or SLIs, application of one or more data transformations, execution of a backwards-compatibility test/determination (as described elsewhere herein), and/or any other suitable action(s) (e.g., processes from a build pipeline).

In the illustrated embodiment, development environment 60 comprises window management controls 68 enabling the developer/user to move, resize, minimise, maximise, restore or close the development environment (or an individual window thereof).

Other optional components of the development environment 60 (not pictured) include e.g., means (e.g., a terminal/console or GUI window) for directly interacting with version control mechanisms; means for setup and management of data source(s) and database storage; means for setup and management of data processing and/or testing frameworks; pipeline setup/management/orchestration/execution controls; and monitoring/logging means.

The above-mentioned components (panes, controls, outputs etc) may in various embodiments either all be provided within the same window of an application, or may be provided in separate windows. A single window may provide all of the components, but may use various window management means or GUI elements known in the art (e.g., tabs and/or ribbons) to prevent the need for all components to be displayed simultaneously.

### Determining breaking changes

In some embodiments, backwards compatibility may be checked during execution of a pipeline (e.g., by a job thereof). A data product manifest may be published to the data product repository that contains the metadata for the most recent build of the data product to have been successfully generated by the pipeline, in order to check for breaking changes in the dataset, its schema, or SLOs/SLls. Specific implementation details concerning these checks are discussed hereinbelow.

It is desirous that a data product is backwards-compatible, with that compatibility proven e.g., by automated testing. It is an objective of the present invention to render this testing so accessible to a data product developer that they are notified of a break in backwards compatibility even before their change to the data product is committed, giving them an opportunity to reconsider their modification and find an alternative non-breaking solution to their technical need.

In various embodiments, removal of tests or constraints applied to or within a schema may be held to constitute a breaking change. For instance, if a "not null" constraint on a column is published as part of a data product manifest (and/or definition/specification), then a data consumer could reasonably build their downstream application under an assumption that this field/column will never contain a null value. Accordingly, if (due to the data product developer removing this constraint) null values did begin appearing in that column, the downstream application founded on this assumption may be caused to break.

In some embodiments, whether a change is "breaking" or not may be a binary yes/no decision made as part of the modification-version compatibility determination step. That is, the compatibility result may be limited to one of two values representing either compatibility or incompatibility with the identified version of the data product. For example, the automated backwards-compatibility determination process may be configured to classify any possible modification to the data product as being either "breaking" or "non-breaking" based on the existing build of the data product, and provide a compatibility result accordingly.

In other embodiments, however, more than two categories of change may be considered and/or more than two compatibility results can be potentially determined. For example, in at least one embodiment, determining a compatibility result may comprise assigning a numerical score to a user-specified modification, or assigning the modification one value from an ordered hierarchy of values (e.g., from "fully compatible" through "partially incompatible" to "fully incompatible", say). In such cases, a compatibility result may be deemed "negative" for the purposes of triggering a failure event if below a particular threshold for a numerical score, or if below a particular threshold of the ordered hierarchy.

A change to a data product may be categorised or evaluated based on the extent to which data consumers of the data product must be assumed to follow precautions and best practices in order not to have their functionality compromised by the change. What is meant by this is that certain changes (e.g., dropping an entire table) have the ability to break integration no matter how well any given data consumer of the data product protects itself and/or sanitises/checks its inputs. Other changes (e.g., adding a column) can break integration for data consumers unadvisedly performing an SQL SELECT * query (or equivalent operation) but not for data consumers which follow best practices by only selecting the specific columns they need. Still other changes (e.g., adding a non-null constraint) lack the potential to break integration for any data consumers. These three categories of change might thus be considered e.g., breaking, semi-breaking (or potentially-breaking) and non-breaking, respectively. Other means of evaluating compatibility of a modification with an existing build will be apparent to those of ordinary skill in the art.

In embodiments, incompatibility of a modification with an existing build's version of a data product may be determined in one or more of the following (non-exhaustive) ways:
a. identifying that a table, column, service level objective, constraint, or other object present in the existing build is removed by the modification;
b. determining that a non-null constraint, a range constraint, a foreign key constraint, or a value-list constraint would be removed by the modification;
c. identifying that a table, column, service level objective, constraint, or other object absent from the existing build is added by the modification;
d. identifying that a table, column or other object is renamed by the modification;
e. identifying the existence of a record which would be invalid under the existing build but which is rendered valid by the modification; or
f. identifying that a range associated with a range-based condition in the existing build would be widened by the modification.

As an illustrative example, if a previous build of a data product comprised a field-level constraint that a particular date lay in the range 1/1/1970 to 1/1/2024, and a modification were specified in which the date was only required to lie in the range 1/1/1900 to 1/1/2024, a negative compatibility result may be determined for that modification. As another example, if a previous build comprised a regex constraint forcing an email field to take only '@' , '.' and alphanumeric characters, and a modification were specified allowing other special characters such as '#' and '~' to enter this field, a negative compatibility result may be determined for that modification.

The process of determining the compatibility result (or indeed, the method of the present invention overall) may occur at a suitable point in the process of developing, building and deploying a data product. For example, the determination/method may be part of the final stage of a data product build pipeline. The determination/method may be part of the final job or step of a data product build pipeline. The determination/method may occur after the user-specified modification has been used to generate at least a part of a new build for the data product. The determination/method may occur after the user-specified modification has been used to generate a data product manifest (or an updated version thereof).

In embodiments in which the build pipeline comprises generation of multiple parts of a final data product manifest/specification/definition (e.g., multiple data product snippets, or other suitable metadata), the determination/method may occur after one or more of these parts have been generated (e.g., by a pipeline or job). Alternatively, the determination/method may occur after all of these parts have been generated.

The existing build of the data product may be or comprise e.g., a data product definition or manifest that has been generated at a time earlier than the execution of the compatibility determination. The existing build may be received from a repository of the data product in development, or from an external repository. The existing build may be received by reference to a file path in a data product development environment, or by reference to a uniform resource locator (URL). The URL may optionally be e.g., a Git URL ("git: //") or a secure hypertext transfer protocol URL ("https: //"). Advantageously, such external references enable back-compatibility checking to be performed against an existing build which is part of a different data product development project having different governance rules, thereby allowing changes to the build to be more tightly controlled if desired.

As mentioned elsewhere herein, detection of a breaking change can cause a specific process or job to fail. In embodiments where the process/job is part of a build pipeline, this can cause the build pipeline itself to fail (i.e., the pipeline overall will fail). In some embodiments, the pipeline may be configured by default to fail if the backwards compatibility testing fails. In some embodiments, the behaviour of the pipeline may be configurable depending on the result of the backwards compatibility test (and may optionally be configurable not to fail in such cases - the failure may e.g., be ignored or trigger a warning).

Tests for backwards compatibility can include tests of the dataset and/or schema specified in the manifest, changes in the SLOs and so forth. Breaking changes may include e.g., removal of a table or column, reduction of a length or precision of a column, addition or removal of a restriction/constraint on a column (such as adding/removing a "not null" constraint), changing of a specified data type for a column (which can be thought of as equivalent to removal of one data type constraint for that column in favour of imposing a different data type constraint), removing SLOs, and the like.

A specific illustrative and exemplary embodiment will now be described, for purposes of explaining just one way of performing the invention.

First, a method according to the invention checks and confirm that a path to an existing build in the form of a data product manifest has been provided. The data product manifest can be thought of as a "golden" manifest against which all of the user-specified changes to the data product are to be compared to determine version compatibility.

Then, using the path provided, the data product identifier of a data product being developed can be compared against the data product identifier in the "golden" data product manifest as a sanity check (if they do not match, the back-compatibility check fails).

Next, a data product version (e.g., schema version) of the "golden" data product manifest is accessed. If a user-specified modification is intended for the same version of the data product it must involve only non-breaking changes (otherwise the build pipeline will fail). Such modifications may be permitted only for the case where the modification specifies a new version of the data product.

Next, the specified modification is checked by comparing the objects in the data product that would result from the modification to those in the "golden" manifest. If an object has been dropped by the modification, then the check (and hence the pipeline) fails.

Next, each individual object is checked for removed columns, reductions in lengths and/or precisions of columns, changes to the datatype of the column, and so forth. If any of these are found, the check fails.

Finally, it is determined whether any SLOs are dropped/removed by the specified modification. If any would be missing, then the check fails.

Should the check fail, the pipeline can fail. An informative message can be given to a user (e.g., the data product developer responsible for specifying the modification) to tell them that the check has failed and optionally specifying the reason for the failure (e.g., "column 'user_ID' has been removed"). On the other hand, if all of the individual sub-checks pass, the build pipeline can conclude successfully and the data product can be deployed (optionally involving publishing an updated data product manifest to a data product registry).

### Miscellaneous

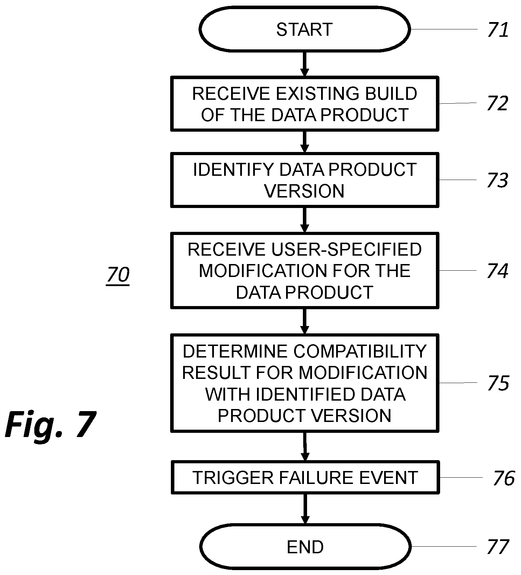

Referring now to Fig. 7, a computer-implemented method 70 for use in developing a data product is depicted, in accordance with an embodiment of the present invention. The method is initiated at 71.

In a step 72, an existing build of the data product is received.

In a step 73, a data product version associated with the existing build is identified.

In a step 74, a user-specified modification for the data product is received.

In a step 75, in response to a user input, a compatibility result for the modification with the identified data product version is automatically determined, based on the existing build of the data product.

In a step 76, in response to the determined compatibility result being a negative compatibility result, a failure event is triggered in relation to the identified data product version. The method ends at 77.

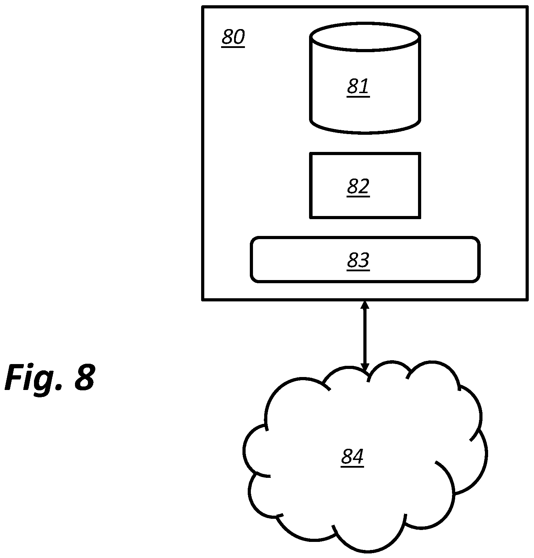

Referring now to Fig. 8, components of a computing device 80 suitable for use in implementing any one or more of the methods described herein either in part or in their entirety. Computing device 80 as depicted includes a memory 81, processor 82, and communication interface 83. The processor 82 is configured to obtain computer executable code from the memory 81 and execute the computer executable code to perform the processes described herein. Any computing device as described herein may likewise also be configured with the same type of components in the same fashion as depicted in Fig. 8.

In some embodiments, computing device 80 may additionally be configured with output components for user interaction, such as console outputs, menu-based systems, graphical user interfaces, displays, CRT or LCD screens, monitors, and the like. In some embodiments, computing device 80 may additionally be configured with input components for user interaction, such as mice, keyboards, trackballs, joysticks, touchscreens, and the like.

Of course, it will be recognised that such user-facing features are by no means necessary for computing device 80 to possess in order to realise the benefits associated with the present invention, and that the benefits of the present invention may be realised even with computing device 80 lacking some or all of the aforementioned user-facing input and/or output components. Indeed, in embodiments having a high degree of automation, no user-facing components (or only minimal user-facing components) may be needed.

Any data described as being stored in one or more of the computing devices disclosed herein may be stored in hardware which is easily accessible by processor 82, such as in memory 81. The data may be held in ROM or RAM, or held in and retrieved from a solid state or hard disk drive, or stored externally and retrieved via a network such as network 84 using communication interface 83. Other technical means of storing data and retrieving it for use by processor 82 will be evident to those of ordinary skill in the art.

It will be appreciated that the transmission of data among components of computing systems and/or data processing systems described herein may occur in a variety of specific ways, many of which are essentially functionally equivalent for the purposes of the present invention. For example, data may be transferred from one computing device to another computing device over a network such as network 84 via "push"-style proactive sending steps by the transferring device, or via "pull"-style steps carried out on the processor of the receiving device, such as repeated polling of the transferring device to determine whether new data is available and ready to be transferred. Networking may be implemented using a layered model such as the TCP/IP model in accordance with any suitable set of selected application, transport, internet and data link layer protocols as will be known to those skilled in the art.

The term "comprising" encompasses "including" as well as "consisting" e.g. a composition "comprising" X may consist exclusively of X or may include something additional e.g. X + Y.

Unless otherwise indicated each embodiment as described herein may be combined with another embodiment as described herein.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, hard-drives, thumb drives, memory cards, etc. and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP (Digital Signal Processor), programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual steps may be deleted from any of the methods without departing from the scope of the subject matter described herein. Aspects of any of the examples described above may be combined with aspects of any of the other examples described to form further examples without losing the effect sought. Any of the steps or processes described above may be implemented in hardware or software.

It will be understood that the above descriptions of preferred embodiments are given by way of example only and that various modifications are possible within the scope of the appended claims and may be made by those skilled in the art. Although various embodiments have been described above with a certain degree of particularity, or with reference to one or more individual embodiments, those skilled in the art could make numerous alterations to the disclosed embodiments without departing from the scope of this invention.

## Claims

1. A computer-implemented method for use in developing a data product, the method comprising:
receiving an existing build of the data product;
identifying a data product version associated with the existing build;
receiving a user-specified modification for the data product;
in response to a user input, automatically determining a compatibility result for the modification with the identified data product version, based on the existing build of the data product; and
in response to the determined compatibility result being a negative compatibility result, triggering a failure event in relation to the identified data product version.

2. The method of claim 1, wherein the user-specified modification comprises one or more of:
a modification of a schema;
an addition, modification or deletion of one or more tables;
an addition, modification or deletion of one or more columns;
an addition, modification or deletion of one or more service level objectives;
an addition, modification or deletion of one or more service level indicators;
an addition, modification or deletion of one or more constraints; or
an addition, modification or deletion of one or more views.

3. The method of claim 1 or claim 2, wherein determining the compatibility result comprises determining a negative compatibility result by identifying that a table, column, service level objective, constraint, or other object present in the existing build is removed by the modification.

4. The method of claim 3, wherein determining the negative compatibility result comprises determining that a non-null constraint, a range constraint, a foreign key constraint, or a value-list constraint is removed by the modification.

5. The method of any preceding claim, wherein determining the compatibility result comprises determining a negative compatibility result by identifying that a table, column, service level objective, constraint, or other object absent from the existing build is added by the modification.

6. The method of any preceding claim, wherein determining the compatibility result comprises determining a negative compatibility result by identifying that a table, column or other object is renamed by the modification.

7. The method of any preceding claim, wherein determining the compatibility result comprises determining a negative compatibility result by identifying the existence of a record which would be invalid under the existing build but which is rendered valid by the modification.

8. The method of any preceding claim, wherein determining the compatibility result comprises determining a negative compatibility result by identifying that a range associated with a range-based condition in the existing build is widened by the modification.

9. The method of any preceding claim, wherein triggering the failure event comprises either:
outputting one or more error messages to a display;
causing a build pipeline of the data product to fail;
outputting a recommendation to change a version number based on the modification; or
automatically creating a new version or branch of the data product for the modification.

10. The method of any preceding claim, wherein triggering the failure event comprises outputting visual information to a user via a display and/or sending a signal to an external system to cause feedback to be provided to a user, optionally wherein the feedback comprises an alert and/or an email.

11. The method of any preceding claim, wherein determining the compatibility result comprises determining a negative compatibility result by identifying that a column length and/or a column precision of a column in the existing build is reduced by the modification.

12. The method of any preceding claim, wherein the user input is a user input to commit the modification to the data product.

13. The method of any preceding claim, wherein the user input is the user input specifying the modification for the data product.

14. A device comprising a processor and a memory, the memory comprising instructions which, when executed by the processor, cause the processor to perform the method of any one of claims 1 to 13.

15. A non-transitory computer-readable storage medium comprising instructions which, when executed on a computer, cause the computer to perform the method of any one of claims 1 to 13.
